# FASCICULE DE BREVET EUROPEEN

(11) **EP 0 757 878 B1**
(45) Date de publication et mention de la délivrance du brevet: **24.07.2002**
(21) Numéro de dépôt: 95918022.5
(22) Date de dépôt: 18.04.1995
(51) Int. Cl.: H04Q 7/10, H04H 1/00

(54) **SIGNAL NUMERIQUE ORGANISE EN CONTAINERS DE DONNEES AUTONOMES, NOTAMMENT POUR LA TRANSMISSION DE DONNEES VERS DES RECEPTEURS D'APPELS SELECTIFS**
DIGITALES SIGNAL ORGANISIERT IN AUTONOMEN DATENBEHÄLTER ZUR DATENÜBERTRAGUNG NACH SELEKTIVEN ANRUFEMPFÄNGERN
DIGITAL SIGNAL DIVIDED INTO SELF-CONTAINED DATA CONTAINERS, IN PARTICULAR FOR DATA TRANSMISSION TO SELECTIVE CALL RECEIVERS

(30) Priorité: 19.04.1994 FR 9404913
(43) Date de publication de la demande: 12.02.1997
(73) Titulaire: FRANCE TELECOM, 75015 Paris (FR); TELEDIFFUSION DE FRANCE SA, 75932 Paris Cédex 15 (FR)
(72) Inventeur: RAHUEL, Jean-Claude, F-35700 Rennes (FR); BACHE, Alain, F-35170 Bruz (FR); GUILLOUET, Edouard, F-35700 Rennes (FR)
(74) Mandataire: Vidon, Patrice
(86) Numéro de dépôt international: FR9500504
(87) Numéro de publication internationale: WO9528810

(56) Documents cités:
- EP-A- 0 493 287
- EP-A- 0 565 470
- WO-A-91/11866
- US-A- 5 089 813

## Description

Le domaine de l'invention est celui de la transmission de données numériques par voie hertzienne. Plus précisément, l'invention concerne la transmission d'informations dédiées à un récepteur particulier, ou à un groupe de récepteurs identifiés.

L'invention s'applique en particulier aux systèmes de transmission numérique dans lesquels au moins certains des récepteurs ont un fonctionnement intermittent, c'est-à-dire entrant en fonctionnement périodiquement, à des instants prédéterminés, de façon à économiser l'énergie.

Il peut par exemple s'agir de récepteurs capables de recevoir des informations particulières (alarmes, informations routières, horaires de moyens de transport, magazines, services médicaux) ou personnelles (radiomessagerie, télécopies, agendas).

Un domaine d'application particulier de l'invention est ainsi celui de la radiomessagerie unilatérale. Par radiomessagerie (en anglo-saxon : "paging"), on entend tout système permettant la transmission d'un message vers un récepteur portable, pouvant avantageusement tenir dans la poche d'un utilisateur. Ces systèmes permettent notamment de transmettre un message à une personne en déplacement, alors même que l'expéditeur du message ne sait pas où se trouve son correspondant.

De façon classique, de tels systèmes assurent, dans le cas le plus simple, l'émission d'un signal sonore et/ou visuel par un récepteur de poche, sur réception d'un message. Ces systèmes sont généralement connus sous la désignation de système d'appel de personne simple.

D'autres récepteurs, plus perfectionnés, permettent la réception et la visualisation d'un court message numérique, tel que, par exemple un numéro de téléphone à rappeler ou une information codée.

De tels récepteurs sont notamment utilisés dans les services de radiomessagerie connus sous les noms d'"Opérator" (marque déposée) et d"'Alphapage" (marque déposée) disponibles sur le territoire français.

Ces systèmes de radiomessagerie, de même que tous les autres systèmes de radiomessagerie actuellement connus, présentent de nombreux inconvénients.

Tout d'abord, ils ne permettent, au mieux, que la transmission d'un court message. En conséquence, il est pratiquement systématiquement nécessaire que l'abonné recevant un message recherche un téléphone pour connaître la teneur réelle de l'information qui lui est destinée.

Par ailleurs, pour des raisons évidentes d'autonomie de fonctionnement, les récepteurs portables ne pouvant être alimentés que par des piles ou des batteries, ces récepteurs doivent avoir un fonctionnement intermittent. Plus précisément, un récepteur de radiomessagerie est le plus souvent en veille (seule une horloge est alimentée), et entre en fonction cycliquement, pour détecter un éventuel message qui lui serait destiné.

Cela implique une gestion particulière des instants d'émission, de façon que chaque message soit émis uniquement lorsque le récepteur destinataire a quitté l'état de veille pour entrer en fonction.

En contrepartie, il convient que les récepteurs disposent de moyens de synchronisation spécifiques, de façon à contrôler les instants d'entrée en fonction. Pour ce faire, dans les systèmes connus, on insère parmi les données de radiomessagerie des données de synchronisation temporelle.

Les opérations correspondantes de synchronisation maintiennent le récepteur en fonction pendant un certain délai, entraînant une consommation d'énergie élevée.

De plus, les systèmes de radiodiffusion connus rencontrent des difficultés de réception de signaux FM dans de nombreuses situations, particulièrement lorsqu'ils sont mobiles et/ou qu'ils sont utilisés en milieu urbain (effet Doppler, évanouissements, échos, multitrajets, brouillages, ...). Ils n'offrent donc pas une garantie suffisante de réception.

Afin de pallier certains de ces inconvénients, la demande de brevet EP-A-0 565 470 ayant pour titre "procédé de transmission de données numériques de radiomessagerie, et récepteur de radiomessagerie correspondant" et déposée par les mêmes déposants que la présente demande, propose un système de radiomessagerie intégré dans un système plus général de radiodiffusion numérique mettant en oeuvre des techniques d'entrelacement en temps et en fréquence, telles que le COFDM.

L'utilisation de ce système permet d'assurer la transmission de données dans de bonnes conditions, même lorsque le canal de transmission est très brouillé. De plus, aucune infrastructure nouvelle n'est nécessaire, puisque l'on utilise le même support que pour la radiodiffusion (norme DAB).

Dans ce système connu, on prévoit un canal d'informations rapides (FIC) qui inclut des drapeaux indicateurs de la présence d'informations correspondant à des services donnés. Pour limiter la consommation d'énergie, ce canal FIC n'est pas entrelacé en fréquence. Les données de radiomessagerie peuvent être insérées dans ce canal FIC, si elles sont peu nombreuses. Sinon, elles sont placées dans un canal de données principal (MSC). Dans ce cas, elles subissent un entrelacement en temps et en fréquence.

En pratique, on constate que la place disponible dans le canal FIC est insuffisante pour permettre des services de qualité, et notamment de la fourniture d'informations de grande longueur.

C'est notamment le cas pour les applications nouvelles de diffusion de données vers des terminaux portables (dits PDA, pour "Personal Data Agent", selon la terminologie anglo-saxonne), utilisés par exemple pour des services de transmission de fichiers, d'information routière, d'informations générales, d'informations boursières, d'informations de gestion de flotte, etc...

Il est donc nécessaire de placer au moins une partie des données de radiomessagerie (ou plus généralement de données identifiées, c'est-à-dire repérables par un ou plusieurs récepteurs destinataires) dans le MSC. Cela pose un inconvénient majeur, à savoir le stockage de plusieurs trames (16 dans le cas de la norme actuelle DAB) pour effectuer le désentrelacement, et donc reconstruire les messages.

Par ailleurs, le décodage d'une donnée utile nécessite la prise en compte d'un nombre important de données non utiles (et en particulier l'ensemble des données contenues dans le FIC et dans le canal dans lequel se trouve l'information utile).

Cette technique est donc clairement incompatible avec une optimisation de la réception dans des récepteurs à autonomie limitée, qui doivent avoir un fonctionnement intermittent et limitée au maximum dans le temps.

L'invention a notamment pour objectif de pallier ces inconvénients de l'état de la technique.

Plus précisément, un objectif de l'invention est de fournir une structure de signal numérique portant des données dédiées à des récepteurs identifiés et permettant de réduire au maximum la consommation électrique des récepteurs, de façon à assurer la plus grande autonomie possible pour ces récepteurs.

Cet objectif se traduit notamment par les deux sous-objectifs suivants :
- réduire le temps de fonctionnement de chaque récepteur, ou plus précisément augmenter le rapport entre le temps de veille, pendant lequel la consommation électrique est très réduite, et le temps de fonctionnement ;
- limiter les traitements (analogiques et numériques) effectués pendant ce temps de fonctionnement.

Un autre objectif de l'invention est de fournir un tel signal, offrant une compatibilité totale avec la structure de signal normalisée pour la diffusion audionumérique (DAB (Digital Audio Broadcasting)), de façon à profiter d'une part du réseau de diffusion, et d'autre part de l'efficacité du codage associée à ce système de diffusion.

L'invention a également pour objectif de fournir un tel signal, permettant le transport de tout type de données, et notamment de données ayant un format prédéfini, tel que par exemple des cellules selon la norme MTA (Mode de Transfert Asynchrone) ou, en anglo-saxon, ATM (Asynchronous Transfert Mode).

Encore un autre objectif de l'invention est de fournir un tel signal, dans lequel la puissance du codage peut être adaptée à l'importance des informations transmises.

L'invention a encore pour objectif de fournir un tel signal permettant la transmission de données dédiées vers de nombreux types de récepteurs. Ainsi, les données peuvent par exemple être des données de radiomessagerie classiques, mais également des fichiers de données de taille importante, destinés par exemple à des micro-ordinateurs autonomes ou encore des données génériques destinées à un groupe de récepteurs (qu'il s'agisse d'informations en temps réel, tels que des informations routières, des alarmes,... ou plus généralement d'informations cycliques (magazines, programmes de radiotélévision,...)).

Ces objectifs, ainsi que d'autres qui apparaîtront par la suite, sont atteints selon l'invention par un signal numérique, destiné à être reçu par une pluralité de récepteurs, et notamment des récepteurs à autonomie (énergétique) limitée, signal du type organisé en trames de signal, chaque trame comprenant un canal de données principal (MSC) organisé en sous-canaux (selon la terminologie classiquement utilisée en DAB), et, éventuellement, soumise à un entrelacement en temps et/ou en fréquence,
au moins certaines desdites trames comprenant de plus une voie de transport de données comprenant au moins un canal de données organisé en blocs de données indépendants et dédiés à un service unique, appelés containers,
chaque container comprenant :
- un entête constitué d'un sous-entête de sélection, contenant notamment des données d'identification d'un groupe d'au moins un récepteur destinataire du container (ou d'identification d'un service donné), et d'un sous-entête de service, contenant notamment des données dédiées au service ;
- un champ de données utile contenant des données source correspondant à un service donné ; et
- un champ de données de détection et/ou de correction d'erreurs,
lesdits sous-entêtes de sélection étant désolidarisés de leurs containers et regroupés dans au moins un container de service spécialisé, soumis à un codage canal simplifié, de façon que lesdits récepteurs puissent détecter la présence d'un container qui lui est dédié, par analyse à faible coût de décodage dudit container de service spécialisé,
lesdits sous-entêtes de sélection contenant de plus des données d'accès permettant de déterminer la position du container correspondant dans ladite voie de données, chaque container subissant indépendamment un codage convolutif spécifique.

Ainsi, l'invention propose une nouvelle structure de transmission de données, selon une organisation dite en containers. Ces containers sont des blocs de données qui présentent plusieurs aspects nouveaux et inventifs, par rapport à l'état de la technique :
- ils sont de taille réduite, et sont dédiés à un service spécifique. Le système offre donc une très grande souplesse d'utilisation ;
- ils subissent un codage source indépendant. En conséquence, ils peuvent être décodés de façon indépendante, ce qui permet de limiter au maximum les traitements ;
- les entêtes de chaque container sont découpés, selon une technique tout à fait nouvelle (selon les techniques connues, les entêtes sont liés aux champs de données), et une partie de chaque entête est regroupée en un emplacement prédéfini dans un container spécial de sélection. A nouveau, cela permet de réduire le temps de veille, car chaque récepteur sait directement, en lisant seulement le container de sélection, si un container susceptible de lui être destiné (l'entête de sélection pouvant désigner notamment un service, un groupe de récepteurs ou un récepteur unique) est présent, et où ce container est placé.

Ces caractéristiques permettent de garantir une autonomie maximale pour les récepteurs autonomes.

Selon un mode de réalisation avantageux, ladite voie de données est découpée en au moins deux canaux, chacun desdits canaux subissant un codage canal distinct. En particulier, au moins un premier canal peut subir un entrelacement en temps, alors qu'au moins un second canal ne subit pas d'entrelacement en temps.

Cela permet notamment de coder différemment les données en fonction de leur importance, de leur catégorie ou du type de récepteur. Il est notamment souhaitable que les données destinées à de "petits" récepteurs de radiomessagerie ne soient pas entrelacées. De même, les données de sélection ne seront pas obligatoirement entrelacés en temps, de façon à réduire les traitements obligatoires à chaque trame. Les données de type fichiers destinées par exemple à des micro-ordinateurs portables peuvent en revanche être entrelacées.

De façon préférentielle, et dans l'objectif de conserver une compatibilité maximum avec les équipements selon la norme DAB, chaque container est constitué d'un nombre entier d"'unités de capacité ", ou "capacity units", en anglo-saxon. Une telle "unité de capacité" correspond, de façon connue, à la plus petite structure, ou au plus petit bloc de données, adressable après convolution, dans le signal DAB, soit 64 bits. Ainsi, classiquement, on définit la taille d'un sous-canal DAB en nombre d"'unités de capacité" le constituant. Selon l'invention, chaque containers pourra par exemple comprendre 6 unités de capacité, soit 384 bits.

Selon un mode de réalisation avantageux de l'invention, au moins certains desdits containers portent chacun une cellule de données au format MTA (mode de transfert asynchrone).

L'invention assure ainsi une passerelle entre le monde de la radiocommunication asynchrone MTA (ATM en anglo-saxon) et celui de la radiomessagerie diffusée.

De façon préférentielle, au moins certains desdits sous-entêtes de sélection sont transmis par anticipation dans au moins une trame précédant la trame contenant le container correspondant.

Cela permet de donner au récepteur un temps de réaction long, et donc d'étaler les traitements. Par ailleurs, cette technique s'avère nécessaire, dès lors qu'un entrelacement temporel est mis en oeuvre. Dans ce dernier cas, l'entête doit être transmise suffisamment tôt pour prendre en compte la profondeur de l'entrelacement (soit, par exemple, au moins 16 trames en avance dans le cas d'un signal selon la norme DAB).

Avantageusement, au moins certains desdits containers comprennent des données de confirmation, placées en début de container, permettent de préciser et/ou valider l'identification d'un récepteur destinataire des données suivantes dans ledit container.

Dans ce cas, le récepteur peut vérifier qu'il y a bien un container correspondant au groupe (ensemble pouvant éventuellement ne contenir qu'un élément, correspondant alors directement au récepteur), ou au service auquel est associé le récepteur, avant d'en effectuer le décodage complet. A nouveau, cela permet une économie d'énergie.

De façon préférentielle, ladite voie de données est placée en fin de chaque trame. Cela permet aux récepteurs de repérer aisément et directement cette voie de données.

L'invention concerne également un procédé de diffusion d'un signal numérique, comprenant les étapes suivantes :
- réception d'au moins un élément de signal source identifié, destiné à être reçu par au moins un récepteur spécifique ;
- construction d'au moins un container de données correspondant audit élément de signal source identifié, comprenant les étapes de :
   - découpage dudit élément de signal source en au moins un bloc de données de taille prédéterminée ;
   - codage convolutif spécifique dudit bloc de données ;
   - association audit bloc de données d'un sous-entête de sélection, contenant notamment des données d'identification d'au moins un récepteur destinataire du container, et d'un sous-entête de service, contenant notamment des données dédiées au service;
- construction d'une voie de données, contenant une pluralité de containers, et regroupant en un emplacement déterminé l'ensemble desdits sous-entêtes de sélection ;
- construction d'une trame de signal, comprenant notamment ladite voie de données ;
- émission de ladite trame.

Par ailleurs, l'invention concerne encore un procédé de réception d'un élément de signal numérique identifié intégré dans une trame de signal, sous la forme de containers de données, dans un récepteur destinataire dudit élément de signal et à fonctionnement sporadique, comprenant les étapes suivantes :
- mise hors veille, commandée à intervalles de temps réguliers, correspondant sensiblement à la durée d'au moins une desdites trames, par une horloge interne ;
- recherche de la synchronisation de la trame en cours de transmission, et recalage de ladite horloge interne ;
- lecture, en un emplacement prédéterminé dans ladite trame, d'un ensemble de sous-entêtes de sélection correspondant aux containers contenus dans ladite trame, et recherche d'un sous-entête de sélection désignant un container destiné audit récepteur ;
- analyse dudit sous-entête de sélection désignant un container destiné audit récepteur, de façon à déterminer la position dans ladite trame dudit container ;
- lecture directe dudit container, et décodage convolutif dudit container, indépendamment des autres containers.

D'autres caractéristiques et avantages de l'invention apparaîtront à la lecture de la description suivante d'un mode de réalisation préférentiel de l'invention, donné à titre illustratif et non limitatif et des dessins annexés dans lesquels :
- la figure 1 est un diagramme d'états illustrant un premier mode de fonctionnement d'un récepteur intermittent selon l'invention ;
- la figure 2 présente un autre diagramme d'états illustrant un second mode de fonctionnement d'un récepteur selon l'invention, mettant en oeuvre une stratégie de pré-sélection puis de confirmation ;
- la figure 3 illustre la structure d'une trame de signal selon l'invention ;
- la figure 4 représente un container de données selon l'invention, tel que transporté par la voie de données de la trame de la figure 3 ;
- la figure 5 présente la structure d'un canal de données de la voie de données de la figure 3 ;
- la figure 6 illustre le cas particulier d'un container de transport de sous-entêtes de sélection ;
- la figure 7 est un schéma synoptique du procédé de construction et de diffusion de trames selon la figure 3.

L'invention concerne donc un signal de radiodiffusion adaptée à la diffusion de données à destination de récepteurs autonomes à fonctionnement intermittent, et en particulier des récepteurs dits "PDA".

Dans l'exemple décrit par la suite, ce signal a pour base le signal utilisé par le système de transmission DAB (Digital Audio Broadcasting (Diffusion Audionumérique)). Il a notamment pour objectif de permettre la diffusion de données vers des équipements disposant d'une faible ressource énergétique, sans déstabiliser les proposition de normes en cours, ni retarder la mise en oeuvre du DAB de base.

Les techniques COFDM et de multiplexage proposées par la norme DAB sont très performantes pour la transmission de signaux sonores de haute qualité, car elles sont très bien adaptées au traitement d'informations continues monodirectionnelles. Ces techniques sont par exemple décrites dans la demande de brevet EP-A-0 565 470.

Les spécifications actuelles de cette norme DAB permettent d'envisager des services de diffusion de données qui utiliseraient des démodulateurs surveillant en permanence le signal DAB et par conséquent travaillant en temps réel sur l'ensemble du signal utile au traitement du service.

Ces spécifications permettent également de définir des services à diffusion cyclique pour lesquels la période de sommeil est importante. Le récepteur démodulerait comme précédemment le signal DAB une fois réveillé. La durée de la fenêtre de travail serait relativement longue, mais compensée par un temps de sommeil lui-même long.

En revanche, ces spécifications sont peu adaptées aux services de données basés sur des cycles de diffusion de faible durée. Pour pouvoir appliquer ces spécifications, il faut introduire des contraintes importantes au niveau de la génération du multiplex et synchroniser la source avec l'équipement de multiplexage. Les services concernés ont typiquement un cycle de 1 mn et utilisent des messages courts émis de façon sporadique à destination d'un abonné (ou d'un groupe d'abonnés) mobile et disposant de faible ressource énergétique.

Les services véhiculés par un tel système peuvent appartenir à deux catégories :
- la première est caractérisée par un traitement de l'information en temps réel pour une restitution et une utilisation en principe immédiate. La transmission de programmes sonores ou composés d'images animées (télévision, visiophone, visioconférence) correspond à cette catégorie. Dans celle-ci certaines informations sont considérées comme très importantes alors que d'autres le sont beaucoup moins. De même, la perte d'une partie des données dégrade temporairement le service mais n'est pas rédhibitoire si cela se produit peu fréquemment.
- la deuxième catégorie correspond à la transmission de blocs d'informations plus ou moins volumineux dont toutes les données ont la même importance et doivent être reçues pour le fonctionnement du service qui les utilise. Dans cette catégorie on trouve la diffusion de fichiers par exemple. Il y a un stockage et une utilisation fréquente des données reçues.

La deuxième catégorie comprend notamment les services organisés en cycle de diffusion dont le temps d'accès au service est directement lié à la durée du cycle de diffusion. On peut distinguer trois types d'informations cycliques :
- l'information temps réel (alarmes, informations routières de types événement et états, horaires des moyens de transport, services médicaux d'urgence, etc...),
- l'information personnelle (radiomessagerie à destination de un ou plusieurs abonnés désignés, télécommande d'appareils),
- les autres informations (magazines, programmes de radiotélévision, bourse, résultat des courses, services médicaux non urgents, informations routières de type tendance, prévision et planification, etc...).

Certains services à temps réel sont à caractère urgent et impératif. L'information temps réel doit être basée sur des cycles courts (entre 1 mn et 10 mn typiquement) avec une priorité aux informations à caractère urgent. Les messages transmis sont de petites tailles (entre 4 et 12 octets).

Les services de radiomessagerie pure sont basés sur des cycles très courts (moins de 2 mn), sur des messages de faible tailles (entre 4 et 80 octets) et sur le fait que les messages à destination d'un abonnée spécifique sont peu fréquents.

Les services de radiomessagerie évolués font appel à des messages de plus forts volumes et de ce fait peuvent être considérés comme des services de diffusion de données avec un adressage des abonnés.

Cet adressage peut être mis à profit, selon l'invention, pour séparer le message en deux parties : une première partie de sélection de l'abonné avec un pointeur (temps et position) sur le reste du message et une deuxième partie contenant le message lui-même. Le message est composé d'une partie de faible taille (8 à 12 octets) est du reste du message (80 octets à xx Koctets). Dans ce cas, les mécanismes de base de la radiomessagerie peuvent s'appliquer aux phases de surveillance et de sélection des abonnés. Cette technique, connue en ell-même, est décrite dans la demande de brevet EP-A-0 565 470 déjà citée.

Les autres services sont moins critiques du point de vue temporel et peuvent être basés sur des cycles de 10 mn et plus. L'accès aux services se fait soit par la surveillance continue du flux COFDM ou sur déclenchement défini dans un calendrier connu a priori, téléchargé par le réseau lui-même ou bien avec la même technique que précédemment.

La caractéristique la plus importante pour ces services est déterminée par l'utilisation d'un réseau de diffusion hertzien. La liaison est en principe monodirectionnelle (ou à très forte dissymétrie dans le cas où une voie de retour est prévue).

On distingue donc deux classes principales de services. La première est une diffusion à l'aveugle vers les utilisateurs. La seconde permet à l'application de savoir :
- si l'utilisateur est présent,
- si les informations sont bien transmises,
- quelles sont les informations à transmettre (dialogue).

Les services qui utilisent la diffusion mono-directionnelle sont les plus contraignants lorsqu'ils s'adressent à des récepteurs disposant de peu d'énergie. Il doit en effet y avoir obligatoirement une synchronisation entre l'émission des données et leur réception. La sécurisation de la transmission ne peut être obtenue que par un dispositif de protection très puissant contre les erreurs de transmission et/ou par une rediffusion de l'information.

L'obligation, pour les services à destination des "PDA", de consommer aussi peu d'énergie que possible oblige les récepteurs à fonctionner en mode veille et à se synchroniser précisément le plus rapidement possible lors des réveils. Dans un premier temps, le récepteur doit se synchroniser sur le signal DAB.

Cette synchronisation est assurée par deux symboles définis par la norme :
- le symbole NUL,
- le symbole TFPC.

Le premier assure, de façon connue, une synchronisation grossière, le second une synchronisation fine en temps et en fréquence.

Ensuite, le récepteur doit se synchroniser sur le service à traiter.

Une importante économie d'énergie peut être réalisée selon l'invention si la durée d'activité des terminaux est la plus faible possible au regard des services traités. Ceci est obtenu par une mise en veille du récepteur. Il est souhaitable de limiter également la puissance nécessaire au décodage des données.

Cette économie de puissance est obtenue en :
- séparant l'acquisition (avec mémorisation), qui se fait obligatoirement en temps réel, du décodage du signal, qui peut se faire en temps plus ou moins différé, et/ou
- en limitant la taille du signal à décoder au strict nécessaire.

Le principe général est d'assurer l'éveil des terminaux sur des créneaux temporels précis, qui seront aussi espacés que ce que les contraintes du service permettent. Cet éveil peut être programmé par une horloge interne par exemple.

Selon l'invention, les informations à diffuser sont scindées en tronçons élémentaires pour réaliser des économies de traitement Chaque tronçon ou message court est séparé en deux parties :
- un bloc de sélection (le plus court possible),
- un ou plusieurs blocs complémentaires.

Les blocs de sélection sont regroupés dans un canal de sélection sur lequel le traitement de décodage est minimisé.

Les blocs complémentaires sont placés dans un canal séparé dont le traitement peut être plus complexe, car il ne sera décodé (partiellement) que si le récepteur est concerné (indication obtenue dans le bloc de sélection).

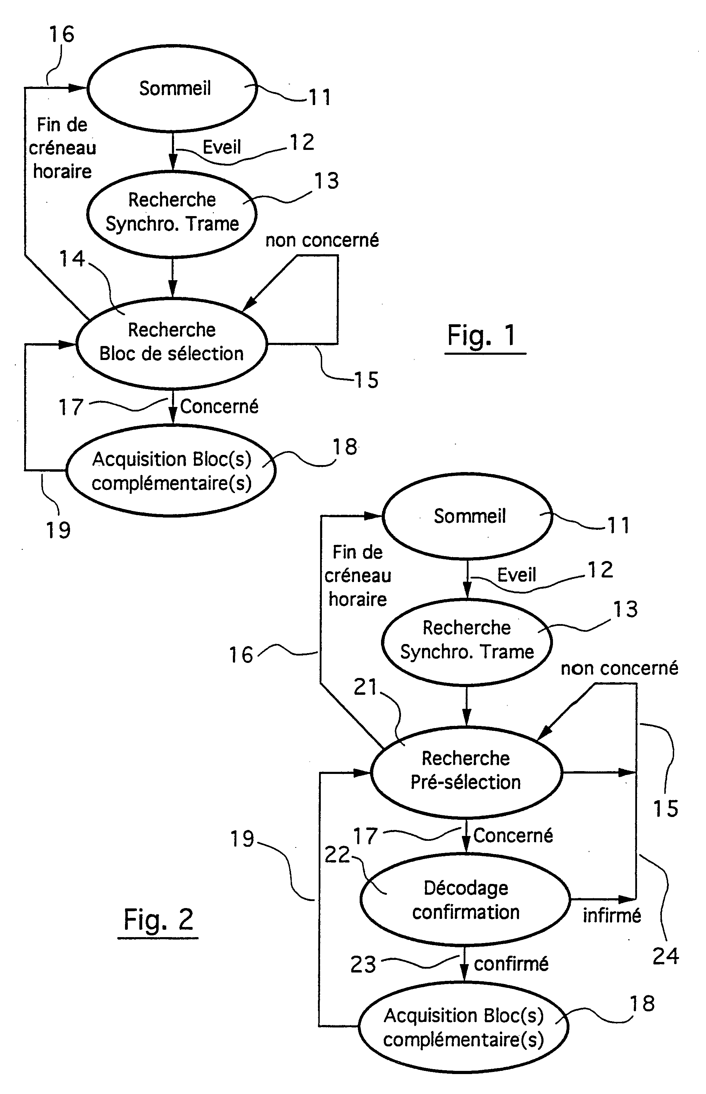

Le fonctionnement d'un terminal peut être représenté par le diagramme d'états de la figure 1, dans le cas particulier d'un service adressé spécfiquement à une personne. On notera que, pour d'autres services, et notamment les services temps réel, tels que des services de diffusion de programmes sonores, une surveillance permanente (c'est-à-dire sans passage en mode de veille) doit être mise en oeuvre.

Le récepteur est en sommeil 11. A un instant prédéterminé, une horloge interne commande son éveil 12. Il recherche (13) alors la synchronisation sur la trame (symboles NUL et TFPC). Ensuite, il consulte (14) le bloc de sélection pour vérifier s'il est concerné par un message. Trois situations peuvent se présenter :
- le récepteur n'est pas concerné par les données de sélection en cours et on est toujours dans le créneau dans lequel des données de sélection pour ce récepteur peuvent être trouvées (15). Il reste en recherche 14 de blocs de sélection ;
- le récepteur n'est pas concerné par les données de sélection en cours et le créneau dans lequel des données de sélection pour ce récepteur peuvent être trouvées est terminé (16). Il retourne en sommeil 11 ;
- le récepteur est concerné par les données de sélection (17). Il passe alors en acquisition des données complémentaires 18.

Après l'acquisition 18 des données complémentaires, le système revient (19) en recherche de données de sélection 14.

Pour réaliser l'acquisition d'un bloc le plus économiquement possible, il faut que celui-ci vérifie au moins certains des critères ci-dessous :
- bloc placé dans un canal non entrelacé temporellement (ou faiblement entrelacé),
- canal dont la position dans le multiplex est invariante et connue du terminal sans décoder le FIC,
- bloc placé dans une trame de numéro connu (éventuellement spécifique d'un service ou d'un groupe de terminaux).

Selon une caractéristique essentielle de l'invention, chaque trame de signal comprend (au moins) un bloc de sélection composé d'un critère de sélection et d'un pointeur d'accès aux donnés complémentaires. Les informations nécessaires pour faire une sélection à coup sûr dépendent des paramètres du service. Ce sont par exemple :
- l'identité du service,
- l'identité du (des) destinataire(s) si le service est personnalisé,
- l'identité du message si celui-ci est repéré,
- l'identité du tronçon de message si celui-ci est tronçonné ou répété.

Deux stratégies peuvent être envisagées :
- le critère de sélection est suffisamment précis pour le décodage du bloc complémentaire se fasse à coup sûr (principe illustré en figure 1),
- le critère permet une pré-sélection qui sera confirmée ou infirmée par un critère supplémentaire qui peut être placé dans le bloc complémentaire de données ou dans un autre bloc intermédiaire dit de confirmation.

Comme il est avantageux d'avoir des blocs de sélection de longueur fixe et dont les champs soient le plus courts possible pour les services qui ne les utilisent pas, il est préférable de répartir l'information sur plusieurs blocs.

Par exemple :
- un bloc de pré-sélection comportant au minimum l'identité du service,
- un bloc de confirmation comportant la référence du message et celle du tronçon.

L'identité du (des) destinataire(s) se trouve définie dans des messages de connexion d'un utilisateur à un service, à un message, etc.... Cette association peut être réalisée par un dispositif de pointage très précis. On peut ainsi, par exemple, définir un adressage à trois niveaux :
- pré-sélection : présence d'un container appartenant au service associé au récepteur ;
- confirmation : présence d'un container de ce service et correspondant au groupe de récepteurs auquel appartient le récepteur ;
- connexion (pointage): accès au(x) container(s) destinés au récepteur, avec également un chaînage de containers, par pointage adéquat.

Le bloc de confirmation se trouve placé au début des données complémentaires. Il est en effet trop petit pour être isolé (quelques octets).

Le champ de pré-sélection contient tout ou partie de l'information suivante (relative au bloc complémentaire):
- position,
- longueur,
- protection (rendement du codage convolutif).

La position peut être donnée de façon (à fixer lors de la mise en place du système) :
- absolue dans le flux DAB, ou
- relative, interne au canal de données.

Le diagramme de la figure 2 montre l'intérêt de l'adjonction du champ de confirmation.

Sur cette figure 2, les phases de sommeil 11, de recherche de la synchronisation 13 et d'acquisition des données complémentaires 18 sont identiques aux phases portant les mêmes numéros et décrites en figure 1. La recherche de données de sélection 14 est remplacée par une recherche 21 de données de présélection, fonctionnant sur le même principe.

En cas de détection de données le concernant, le récepteur passe en décodage 22 des données de confirmation, placées au début des données complémentaires désignées par les données de pré-sélection. Si la sélection est confirmée (23), le récepteur passe en acquisition et décodage des données complémentaires suivantes. Sinon, il revient (24) en recherche 21 de présélection.

La voie de données comporte plusieurs parties, et en particulier au moins un canal de données de données non entrelacées temporellement (canal rapide) permettant un accès rapide aux informations transportées. L'absence d'entrelacement sur 16 trames est compensé par une répétition des messages, pour les services qui le nécessitent.

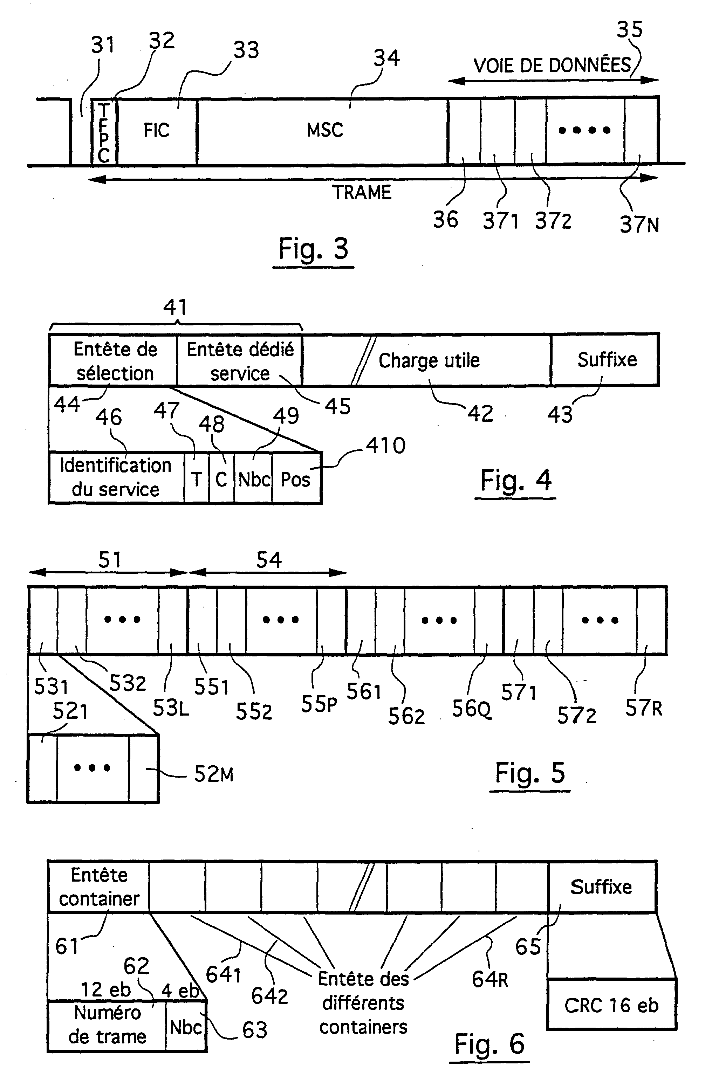

La figure 3 est un exemple de trame de signal selon l'invention.

Cette trame comprend tout d'abord les éléments classiques suivants :
- premier symbole de synchronisation NUL 31;
- second symbole de synchronisation et de contrôle automatique de fréquence TFPC 32 ;
- canal d'information rapide FIC 33 ;
- canal de données principal MSC 34.

Selon l'invention, la trame comprend de plus une voie dédiée aux données 35, organisée en canaux contenant eux-mêmes des containers. Cette voie 35 comprend notamment un canal de signalisation 36.

Les messages d'organisation de la voie de données, de messagerie de contrôle d'accès, de sélection d'abonnés et/ou de services et les messages d'alarme devant être restitués en temps réel pourront éventuellement emprunter ce canal 36 dédié en priorité à la signalisation.

Il est positionné de préférence en fin de trame, seule position facilement identifiable dans la trame. Si cela est impossible à réaliser (par exemple pour des raisons de normalisation), l'information de position et de dimension se trouve de préférence dans le canal FIC.

Les autres parties 37₁ à 37_{N}, appelées canaux de données, peuvent être sélectivement entrelacées ou non. Cette répartition en canal peut être modifiée au cours du temps en fonction des indications données dans des canaux de signalisation généraux.

Selon une caractéristique essentielle de l'invention, la voie de données est formée de containers alignés sur un multiple de "capacity units". Un tel container est illustré schématiquement en figure 4.

Chaque container est affecté à un service unique. Il contient un entête 41, puis les données relatives au service (charge utile) 42 et enfin un suffixe 43. Le codage convolutif s'applique indépendamment sur chaque container, et plus précisément sur la partie restante (éléments 45, 42 et 43) après séparation de l'entête de sélection 44 selon le principe exposé ci-après. Les bits de fermeture sont introduits par poinçonnage du code.

Une détection/correction d'erreurs simple sur l'ensemble du container est suffisante car en COFDM la transition entre fonctionnement et non fonctionnement est très abrupte. On cherchera donc principalement à détecter les erreurs non corrigibles, en vue d'une élimination des containers erronés et les mécanismes de niveaux supérieurs devront être orientés vers des techniques de recomposition de message à partir de réception entachée de trous dans l'information.

Le suffixe 43 contient un CRC. La position du suffixe 43 peut être amenée à changer, car celui-ci se trouve dans la zone de poinçonnage du codage convolutif pour l'insertion des bits de fermeture. Dans le cas contraire, on choisira de nouvelles règles de poinçonnage. Le CRC doit permettre de faire de la détection et correction d'erreurs performantes.

L'organisation en containers alloués à un seul service selon la présente invention permet:
- de ne perturber qu'un seul service à la fois lors des problèmes de réception,
- de désigner simplement les containers d'un service parmi les autres.

Pour des raisons d'économie d'énergie, l'en-tête d'un container est scindé (physiquement) en deux parties, ainsi que cela est illustré en figure 4 :
- l'en-tête de sélection 44 d'un service parmi N,
- l'entête utile au transport des données de service 45.

L'entête de sélection 44 est une caractéristique essentielle de l'invention. Elle peut par exemple être de taille fixe (28 ou 32 éléments binaires) et comprendre les champs suivants :
- identification du service 46 (14 ou 16 eb) ;
- taille du container T 47 (2 eb);
- type de convolution C 48 (2 eb) ;
- nombre de containers consécutifs Nbc 49 (2 ou 4 eb) ;
- position du container Pos 410 (8 eb).

Les champs Nbc et Pos peuvent ne pas exister. Dans ce cas, il faut autant de champs entêtes que de containers. Le choix entre ces deux solutions est fait en fonction des modes de transport les plus appropriés. Si le champ Pos n'existe pas il y a une plus grande sensibilité aux erreurs, car une erreur sur les valeurs Nbc ou T entraîne la perte de toutes les informations du canal. L'adjonction d'un champ de positionnement absolu permet de supprimer ce défaut.

La répartition de l'information entre l'entête de sélection 44 et l'entête dédié aux services 45 est ajustée, selon les modes de réalisation. Il peut s'avérer nécessaire d'intégrer des champs supplémentaires dans l'entête de sélection 44. La proposition ci-dessus donne l'information minimale à intégrer.

La taille des containers après convolution est avantageusement un multiple entier de 384 bits. Leurs tailles, avant convolution, peuvent donc être :

| | Taille = 384 | Taille = 768 | Taille =1152 | Taille = 1536 |
|---|---|---|---|---|
| rendement 1/4 | 12 octets | 24 octets | 36 octets | 48 octets |
| rendement 1/3 | 16 octets | 32 octets | 48 octets | 64 octets |
| rendement 3/8 | 18 octets | 36 octets | 54 octets | 72 octets |
| rendement 1/2 | 24 octets | 48 octets | 72 octets | 96 octets |

La taille des containers ne peut pas varier lors d'éventuelles répétitions pour permettre une reconstruction par la réception discontinue de l'information.

Le tableau ci-dessus permet de constater que la taille de 54 octets est particulièrement bien adaptée au transport des cellules ATM. En effet, elle permet d'offrir un mode transparent pour les 53 octets bruts ou un mode de transport amélioré pour les 48 octets de charge utile (cf types de containers décrits par la suite).

Ces diverses tailles permettent de s'adapter facilement aux types de données à véhiculer. En effet, les petites tailles seront plutôt utilisées pour les messages très courts (ex radiomessagerie numérique, messagerie de la voie de signalisation, etc...) ou des pointeurs vers des informations plus volumineuses. A l'opposé, les containers de la dernière colonne seront utilisés de préférence pour le transport des fichiers de données volumineux ou des messages de l'ordre de 80 octets.

Le rendement du codage convolutif sur l'entête de sélection doit être égal à celui du service le plus protégé pour éviter des "gains" de containers dans le canal considéré.

La structure du signal de l'invention présente de nombreux avantages.

Notamment, il est possible de mélanger des containers ayant une protection différente contre les erreurs (rendement du codage convolutif différent) car la taille et le type de codage convolutif sont connus avant de commencer le décodage dit de Viterbi.

En fait, selon une caractéristique essentielle de l'invention, pour éviter le traitement des 80 bits de troncature à chaque container, on regroupe tous les entêtes de sélection en début de canal de données.

Les récepteurs n'ont alors plus qu'à analyser cette partie pour identifier les containers qui leur sont destinés (étapes 14, figure 1 et 21, figure 2). Tous ces entêtes de sélection sont regroupés dans des containers de service en début de chaque canal de données.

La figure 5 illustre un tel canal de données. Il contient une voie de service 51 contenant tous les entêtes de sélection 52₁ à 52_{M} de containers. Ces voies de service subissent un codage convolutif dont le rendement est au moins égal au rendement des containers les plus protégés du canal concerné. Pour le canal contenant la voie de signalisation principale ce rendement sera connu à priori (rendement = 1/4, 1/3, ou 3/8 à définir).

Les entêtes de sélection sont regroupés dans des containers de service 53₁ à 53_{L} dont la structuration est illustrée en figure 6, et présentée plus précisément par la suite.

Chaque canal comporte ensuite une voie de signalisation principale 54 composée de containers 55₁ à 55_{P} appartenant au premier canal de données non entrelacées dont la position est fixe et connue.

La voie de signalisation 54 véhicule les informations (ou des pointeurs vers ces informations) :
- d'organisation de la voie de données (positionnement des entêtes de sélection des différents canaux de données, caractéristiques de ces canaux de données, etc...);
- d'acheminement des services (par exemple les fréquences alternatives dédiées au suivi d'un réseau);
- d'accès aux services (par exemple contrôle d'accès, etc...);
- etc...

Les informations relatives à un service particulier sont véhiculées par les containers de commande 56₁ à 56_{Q} de ce service. Il s'agit notamment des informations :
- d'acheminement des services (par exemple les fréquences alternatives dédiées à un service ou un groupe de services, etc) ;
- de calendrier de services ;
- d'adressage et/ou de connexion des utilisateurs aux services ;
- de formation dynamique des groupes d'abonnés ;
- etc...

Enfin, le canal comprend une série de containers 57₁ à 57_{R} de données utiles.

Un tel canal peut être entrelacé ou non entrelacé, en fonction des besoins et/ou du type de récepteur.

On décrit maintenant, à titre d'exemples, différentes structures possibles de containers, en fonction des applications.

D'une façon générale, le type de données transportées détermine un mode d'acheminement particulier des données. La longueur des champs ne sont données qu'à titre indicatif. D'autres champs, et d'autres types de containers peuvent être définis, en fonction des besoins.

### 1. container de voie de service (figure 6)

L'entête de service 61 du container comprend un numéro de trame 62, codé sur 12 eb, et le nombre de containers restant dans la voie de service Nbc 63, sur 4 eb. Dans un autre mode de réalisation, Nbc peut être remplacé par un élément binaire P/D valant 1 pour le dernier container. Les 3 éléments binaires restants sont réservés pour un usage futur.

Le container comprend ensuite une série d'entêtes 64₁ à 64_{S} des containers du canal, puis un suffixe 65, qui est un CRC sur 16 eb.

### 2. container pour services à accès sporadique et à forte contraintes temporelles.

L'entête de sélection (positionné dans la voie de service) contient l'identificateur de service ou de voie logique qui permet d'associer temporairement les containers à un service donné. Des identificateurs de messages et de service ou de voie logique permettent d'associer un (ou plusieurs) utilisateur(s) à un message. Une technique par pointage peut également être mise en oeuvre.

L'entête de service comprend notamment un identificateur de message, incrémenté de un à chaque émission d'un nouveau message (modulo 1024 par exemple).

Le reste de l'entête assure la reconstruction d'un message donné. Le premier container d'un message indique le nombre total de containers du message. Les containers intermédiaires transportent l'indication du nombre de containers restant à transmettre, ce qui autorise une réception discontinue du message. Le dernier container indique la longueur utile des données transportées dans celui-ci.

Des informations complémentaires, telles que le type des informations (données ou commandes ou l'embrouillage, peuvent être ajoutées.

### 3. containers pour services de transport de fichiers

Toutes les données qui appartiennent à ces services sont transportées dans des containers affectés à un ou plusieurs utilisateurs par l'intermédiaire de la voie de signalisation associée. Cette désignation peut aussi être effectuée par un dispositif de pointage comme précédemment. Un pointeur associe un (ou plusieurs) numéro(s) d'abonnés à une voie logique et en conséquence à un fichier. Il peut désigner la position de cette voie logique dans la voie de données et donne les informations nécessaires au suivi des containers concernés.

Si les informations d'accès sont trop volumineuses, le pointeur peut désigner un container de signalisation contenu dans la voie de données concernées. Ce container indique ensuite ou se trouvent les données utiles du service.

La voie logique est ouverte pour la transmission de tout le fichier (une session). Le fichier est scindé en groupe de données puis en containers de dimension identique (le dernier container contient le reste des données). Un groupe de données peut être formé de 256 containers.

Un identificateur de voie logique contenu dans l'entête de sélection permet d'associer temporairement les containers à un service donné (session). Un identificateur de groupe de données permet d'associer un (ou plusieurs) utilisateur(s) aux groupes de données.

Le reste de l'entête assure la reconstruction d'un groupe de données. Le premier container d'un groupe de données indique le nombre total de containers du groupe. Les containers intermédiaires transportent l'indication du nombre de containers restant à transmettre. Le dernier container indique la longueur utile des données transportées dans celui-ci.

Un identificateur de groupe de données est incrémenté de 1 (modulo 1024 par exemple) à chaque émission d'un nouveau groupe. La fin de transmission d'un groupe est marquée par l'envoi dans le dernier container d'un contrôle d'erreur (CRC 32 eb). Un fichier est découpé en groupes de taille fixe, sauf évidement pour le dernier groupe qui contient le reste des données.

### 4. Container pour services de transport de données ATM en mode transparent

Dans ce mode, les 53 octets d'une cellule ATM sont transportées dans un container de 54 octets.

Toutes les données appartenant à ces services sont transportées dans des containers qui sont affectés à un ou plusieurs utilisateurs par l'intermédiaire de la voie de signalisation associée. Cette désignation peut aussi être effectuée par un dispositif de pointage. Un pointeur associe un (ou plusieurs) numéro(s) d'abonnés à une voie logique et en conséquence à une liaison ATM. Si les informations d'accès sont trop volumineuses, alors le pointeur désigne un container de signalisation contenu dans la voie de données concernées. Ce container indique ensuite ou se trouvent les données utiles du service.

La voie logique est ouverte pour toute la durée de la transmission (une session). Les 53 octets sont inclus dans un container.

### 5. Containers de transport ATM en mode non transparent.

Dans ce cas (de même que pour le cas précédent), le type de l'AAL est une information qui peut ne pas être obtenue. Dans ce cas, les 3 eb correspondants sont positionnés à 1.

Les 4 bits PT, Rfu et Clp doivent être recopiés car leur signification n'est pas bien établie aujourd'hui et ils pourraient être utiles au décodage de la cellule ATM. La connexion à un ou plusieurs utilisateurs se fait soit par un mécanisme de pointage soit par une association usager(s) avec identificateur de service (obtenu à partir de l'identificateur de conduit virtuel et l'identificateur de voie virtuelle) et un identificateur de voie logique.

Un indice de continuité est incrémenté de 1 (modulo 4096 par exemple) lors de l'émission d'une nouvelle cellule.

Les sigles AAL, PT, Rfu et Clp sont des termes couramment utilisés dans la technique ATM. Ils sont notamment définis dans le glossaire (p. 63) du numéro 144, 2^{ème} trimestre 1991, de la revue "l'écho des Recherches", diffusée par le Centre National des Télécommunications et l'Ecole Nationale Supérieure des Télécommunications.

### 6. Containers pour services synchrones.

Toutes les données appartenant à ces services sont transportées dans des containers qui sont accessibles à un ou plusieurs utilisateurs par l'intermédiaire de la voie de signalisation associée. Cette désignation peut aussi être effectuée par un dispositif de pointage. Un pointeur associe un (ou plusieurs) numéro(s) d'abonnées à un identificateur de service ou de voie logique.

Si les informations d'accès sont trop volumineuses, alors le pointeur désigne un container de signalisation contenu dans la voie de données concernées. Ce container indique ensuite ou se trouvent les données utiles du service. Un usager peut accéder à ces informations par une sélection effectuée à partir des informations contenues dans la voie de signalisation (nom du service, calendrier des services, etc...).

Un indice de continuité est incrémenté de 1 (modulo 4096) lors de l'émission d'une nouvelle cellule.

### 7. Container pour services de transport de magazines

Toutes les données appartenant à ces services sont transportées dans des containers qui ont été décrits dans la voie de signalisation associée. La désignation donne la position du canal transportant le magazine et donne les informations nécessaires au suivi des containers concernés. Si les informations d'accès sont trop volumineuses, alors le descripteur est remplacé par un pointeur sur un container de signalisation contenu dans la voie de données concernées. Ce container indique ensuite où se trouvent les données utiles du service.

La voie logique est ouverte pendant toute la durée d'émission du magazine (une session). Le magazine est organisé en pages. Ces dernières peuvent subir des mises à jour. Une page est une unité d'informations à traiter en un seul bloc. Les pages sont organisées en containers de dimension identique (le dernier container contient les reste des données).

Un identificateur de voie logique contenu dans l'entête de sélection permet d'associer temporairement les containers à un service et à un magazine donnés (session). Un identificateur de page permet de sélectionner une page parmi les n pages.

Le reste de l'entête assure la reconstruction du contenu d'une page d'un magazine déterminé. Le premier container indique le nombre total de container de la page. Les containers intermédiaires transportent l'indication du nombre de containers restant à transmettre, ce qui autorise une réception discontinue des tronçons de page. Le dernier container indique la longueur utile des données transportées dans celui-ci.

Un champ de contrôle d'erreurs (CRC) est ajouté à la fin des données d'une page.

### 8. transport des containers contenant des pointeurs.

Les champs de bits indiqués ci-dessous sont ceux qui doivent être obligatoirement renseignés, mais d'autres champs peuvent être ajoutés en fonction de chaque service :
- un bit (CA) désignant la présence ou l'absence des informations de contrôle d'accès.
- un identificateur de voie logique égal à 0 lorsque le service est identifié directement ou il peut exister un drapeau signalant sa présence. Il en est de même pour un indicateur de canal.
- un drapeau (C/V) permettant de savoir s'il s'agit de la position de la voie de service ou du container. Par exemple, pour la radio messagerie, la position du container transportant le message (container de 96 octets max) remplace l'information de position de la voie de service.
- des indications de suivi donnent par exemple les règles d'émission imposées aux containers suivant le premier (espacement en nombre de trames, position dans la trame, etc...).

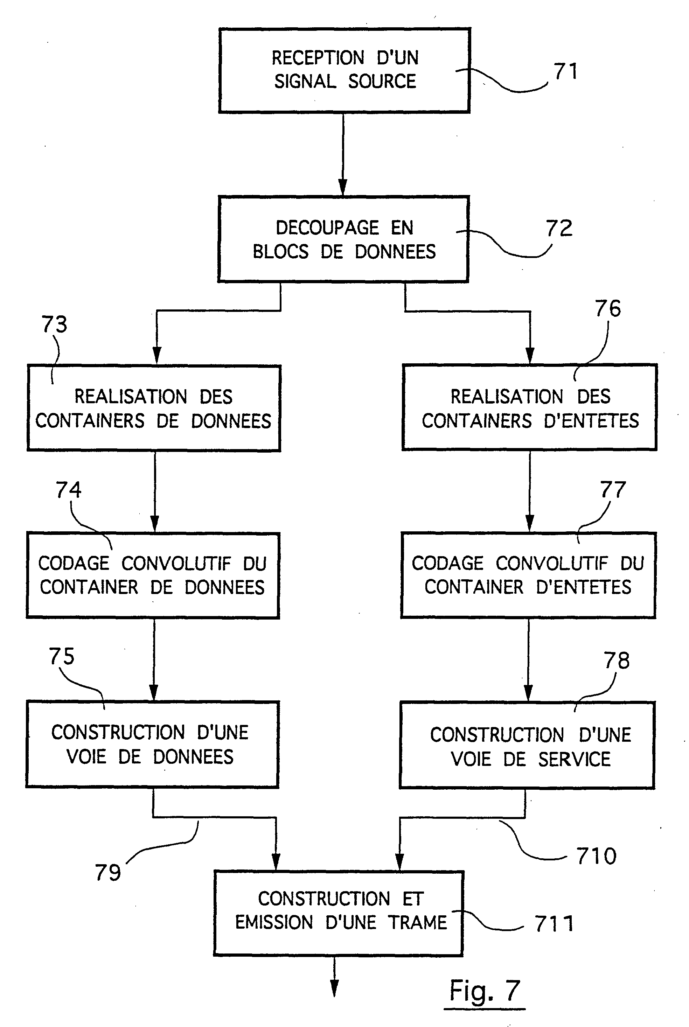

L'invention concerne également le procédé de construction et de diffusion d'un signal tel que décrit précédemment. La figure 7 est un synoptique général illustrant le principe de ce procédé.

Dans un premier temps, on reçoit (71) un signal source à transmettre (un message de radiomessagerie, un signal d'information, un fichier, des cellules ATM,...). Puis, ce signal est découpé (72) en blocs de données. Ensuite, on construit les containers selon l'invention. On distingue d'une part la construction des containers de données (73, 74, 75), et d'autre part la construction des containers d'entêtes (76, 77, 78).

En ce qui concerne les données, on réalise (73) chaque container, puis on applique un codage convolutif (74) spécifique sur chaque container. Les containers, après codage, sont organisés (75) en voie de données 79.

Parallèlement, on réalise (76) les containers d'entêtes, qui sont soumis également à un codage convolutif indépendant (77), puis regrouper (78) en voies de service 710.

Les voies de données 79 et voies de service 710 (et éventuellement d'autres canaux et sous-canaux classiques) sont organisées (711) en trames, qui sont émises.

## Revendications

1. Signal numérique, destiné à être reçu par une pluralité de récepteurs, et notamment des récepteurs à autonomie limitée, du type organisé en trames de signal, chaque trame comprenant un canal de données principal (34) organisée en sous-canaux,
**caractérisé en ce qu'**au moins certaines desdites trames comprennent de plus une voie de transport de données (35) comprenant au moins un canal de données organisé en blocs de données indépendants et dédiés à un service unique, appelés containers (36, 37ᵢ à 37_{N} ; 53ᵢ, 55ᵢ, 56ᵢ, 57ᵢ),
chaque container comprenant:
- un entête (41) constitué d'un sous-entête de sélection (44), contenant notamment des données d'identification (46) d'un groupe d'au moins un récepteur destinataire du container, et d'un sous-entête de service (45), contenant notamment des données dédiées au service ;
- un champ de données utile (42) contenant des données source correspondant à un service donné ; et
- un champ de données de détection et/ou de correction d'erreurs (43),
lesdits sous-entêtes de sélection (44) étant désolidarisés de leurs containers et regroupés dans au moins un container de service spécialisé, soumis à un codage canal simplifié, de façon que lesdits récepteurs puissent détecter la présence d'un container qui lui est dédié, par analyse à faible coût de décodage dudit container de service spécialisé,
lesdits sous-entêtes de sélection (44) contenant de plus des données d'accès permettant de déterminer la position (410) du container correspondant dans ladite voie de données,
chaque container subissant indépendamment un codage convolutif spécifique (74).

2. Signal selon la revendication 1, **caractérisé en ce que** ladite voie de données est découpée en au moins deux canaux, chacun desdits canaux subissant un codage canal distinct.

3. Signal selon la revendication 2, **caractérisé en ce que en ce qu'**au moins un premier canal subit un entrelacement en temps, et **en ce qu'**au moins un second canal ne subit pas d'entrelacement en temps.

4. Signal selon l'une quelconque des revendications 1 à 3, ledit signal étant organisé en blocs de données élémentaires, de taille prédéfinie, dits unités de capacités, **caractérisé en ce que** chaque container est constitué d'un nombre entier d'unités de capacité.

5. Signal selon l'une quelconque des revendications 1 à 4, **caractérisé en ce qu'**au moins certains desdits containers portent chacun une cellule de données au format MTA (mode de transfert asynchrone).

6. Signal selon l'une quelconque des revendications 1 à 5, **caractérisé en ce qu'**au moins certains desdits sous-entêtes de sélection sont transmis par anticipation dans au moins une trame précédant la trame contenant le container correspondant.

7. Signal selon l'une quelconque des revendications 1 à 6, **caractérisé en ce qu'**au moins certains desdits containers comprennent des données de confirmation, placées en début de container, permettant de préciser et/ou valider l'identification d'un récepteur destinataire des données suivantes dans ledit container.

8. Signal selon l'une quelconque des revendications 1 à 7, **caractérisé en ce que** ladite voie de données (35) est placée en fin de chaque trame.

9. Procédé de diffusion d'un signal numérique comprenant les étapes suivantes :
- fourniture (71) d'au moins un élément de signal source identifié, destiné à être reçu par au moins un récepteur spécifique ;
- construction (72) d'au moins un container de données correspondant audit élément de signal source identifié, comprenant les étapes de :
- découpage (73) dudit élément de signal source en au moins un bloc de données de taille prédéterminée ;
- codage convolutif (74) spécifique dudit bloc de données ;
- association (75) audit bloc de données d'un entête, comprenant un sous-entête de sélection, contenant notamment des données d'identification d'un groupe au moins un récepteur destinataire du container, et un sous-entête de service, contenant notamment des données dédiées au service ;
- création d'au moins un container spécial de sélection, dans lequel sont regroupés lesdits sous-entêtes de sélection désolidarisés des entêtes correspondants ;
- construction (76) d'une voie de données, contenant une pluralité de containers, dont au moins un container spécial de sélection ;
- construction (77) d'une trame de signal, comprenant notamment ladite voie de données ;
- émission (77) de ladite trame.

10. Procédé de réception d'un signal selon l'une quelconque des revendications 1 à 8, dans un récepteur destinataire dudit élément de signal et à fonctionnement sporadique comprenant les étapes suivantes :
- mise hors veille (12), commandée à intervalles de temps réguliers, correspondant sensiblement à la durée d'au moins une desdites trames, par une horloge interne ;
- recherche (13) de la synchronisation de la trame en cours de transmission, et recalage de ladite horloge interne ;
- lecture, en un emplacement prédéterminé dans ladite trame, d'un ensemble de sous-entêtes de sélection correspondant aux containers contenus dans ladite trame, et recherche (14) d'un sous-entête de sélection désignant un container destiné audit récepteur ;
- analyse (14 ; 21, 22) dudit sous-entête de sélection désignant un container destiné audit récepteur, de façon à déterminer la position dans ladite trame dudit container ;
- lecture (18) directe dudit container, et décodage convolutif dudit container, indépendamment des autres containers.

## Patentansprüche

1. Von einer Vielzahl von Empfängern und insbesondere von Empfängern mit begrenzter Reichweite zu empfangendes digitales Signal, das nach Zeitabschnitten organisiert ist, wobei jeder Zeitabschnitt einen nach Unterkanälen organisierten Hauptdatenkanal (34) umfasst, **dadurch gekennzeichnet, dass** mindestens einige der Zeitabschnitte einen zusätzlichen Pfad für die Datenübertragung (35) umfassen, der seinerseits mindestens einen Datenkanal umfasst, der nach unabhängigen Datenblöcken organisiert ist, welche einer einzigen Dienstleistung gewidmet sind und Container genannt werden (36, 37ᵢ bis 37_{N}; 53ᵢ, 55ᵢ, 56ᵢ, 57ᵢ),
wobei jeder Container folgendes umfasst:
- einen Kopf (41), bestehend aus einem Auswahlunterkopf (44), der insbesondere Identifizierungsdaten (46) einer Gruppe von mindestens einem Annahmeempfänger des Containers umfasst und aus einem Dienstleistungsunterkopf (45), der insbesondere Daten enthält, die der Dienstleistung gewidmet sind;
- ein nützliches Datenfeld (42), welches Quelldaten umfasst, die einer gegebenen Dienstleistung entsprechen und
- ein Feld von Daten zum Erfassen und/oder Korrigieren von Fehlern (43), wobei die Auswahlunterköpfe (44) von ihren jeweiligen Containern abgetrennt und in mindestens einem der spezialisierten Dienstleistungscontainer wieder zusammengefügt werden, der einer vereinfachten Kanalkodierung unterworfen wird, um den Empfängern das Erfassen der Gegenwart eines ihnen gewidmeten Containers zu ermöglichen, mittels einer Analyse geringen Dekodierungsaufwands des spezialisierten Dienstleistungscontainers, wobei die Auswahlunterköpfe (44) immer mehr Zugangsdaten umfassen, welche das Feststellen der Position (410) des entsprechenden Containers im Datenpfad ermöglichen, wobei jeder Container in unabhängiger Weise einer spezifischen faltenden Kodierung (74) unterzogen wird.

2. Signal nach Anspruch 1, **dadurch gekennzeichnet, dass** der Datenpfad in mindestens zwei Kanäle aufgeteilt wird, wobei jeder dieser Kanäle einer unterschiedlichen Kanalkodierung unterliegt.

3. Signal nach Anspruch 2, **dadurch gekennzeichnet, dass** mindestens ein erster Kanal einer zeitlichen Verschachtelung unterworfen wird und, dass mindestens ein zweiter Kanal keiner zeitlichen Verschachtelung unterliegt.

4. Signal nach einem der Ansprüche 1 bis 3, wobei das Signal nach Kapazitätseinheiten genannten elementaren Datenblöcken vorgegebener Größe organisiert ist, **dadurch gekennzeichnet, dass** jeder Container aus einer ganzen Zahl von Kapazitätseinheiten gebildet wird.

5. Signal nach einem der Ansprüche 1 bis 4, **dadurch gekennzeichnet, dass** mindestens einige der Container jeweils eine Zelle mit Daten im MTA-Format (asynchroner Übertragungsmodus) tragen.

6. Signal nach einem der Ansprüche 1 bis 5, **dadurch gekennzeichnet, dass** mindestens einige der Auswahlunterköpfe im Voraus in mindestens einem Zeitabschnitt gesendet werden, der vor dem Zeitabschnitt liegt, der den entsprechenden Container enthält.

7. Signal nach einem der Ansprüche 1 bis 6, **dadurch gekennzeichnet, dass** mindestens einige der Container Bestätigungsdaten umfassen, die am Anfang des Containers liegen, mit denen die Identifizierung eines Zielempfängers der im Container nachfolgenden Daten präzisiert und/oder validiert wird.

8. Signal nach einem der Ansprüche 1 bis 7, **dadurch gekennzeichnet, dass** der Datenpfad (35) am Ende eines jeden Zeitabschnitts liegt.

9. Verfahren zum Senden eines digitalen Signals, welches die folgenden Schritte umfasst:
- Bereitstellung (71) von mindestens einem identifizierten Quellsignal, das von mindestens einem spezifischen Empfänger empfangen werden soll;
- Aufbau (72) von mindestens einem Datencontainer, der dem erwähnten identifizierten Quellsignal entspricht, wobei folgende Schritte aufeinanderfolgen:
- Zerschneiden (73) des Quellensignalelementes in mindestens einen Datenblock vorgegebener Größe;
- spezifische faltende Kodierung (74) des erwähnten Datenblocks;
- Assoziieren (75) eines Kopfes zu dem Datenblock, der einen Auswahlunterkopf umfasst, welcher insbesondere Daten zum Identifizieren von mindestens einer Gruppe von mindestens einem Zielempfänger des Containers sowie eines Dienstleistungsunterkopfes, der insbesondere der Dienstleistung gewidmete Daten enthält;
- Aufbau von mindestens einem speziellen Auswahlcontainer, in dem die erwähnten Unterköpfe zusammengefügt sind, die von den entsprechenden Köpfen getrennt wurden;
- Aufbau (76) eines Datenpfades, der eine Vielzahl von Containern enthält, darunter mindestens einen speziellen Auswahlcontainer;
- Aufbau (77) eines Signalzeitabschnittes, der insbesondere den erwähnten Datenpfad umfasst;
- Senden (77) des erwähnten Zeitabschnitts.

10. Verfahren zum Empfang eines Signals nach einem der Ansprüche 1 bis 8 in einem Zielempfänger des erwähnten Signalelementes, das sporadisch funktioniert und die folgenden Schritte umfasst:
- Abschalten des Bereitschaftszustandes (12) in gleichmäßige, in etwa der Dauer von mindestens einer der Zeitabschnitte entsprechenden Zeitintervalle, mittels einer inneren Uhr;
- Aufsuchen (13) der Synchronisierung des Zeitabschnitts während der Übertragung und Zurücksetzen der inneren Uhr;
- Lesen an einer vorgegebenen Stelle in dem Zeitabschnitt einer Menge von Auswahlunterköpfen, die den im erwähnten Zeitabschnitt enthaltenen Containern entsprechen und Suche (14) eines Auswahlunterkopfes, der einen Container bezeichnet, der diesem Empfänger zugesendet werden soll;
- Analyse (14; 21, 22) des erwähnten Auswahlunterkopfes, der einen Container bezeichnet, der diesem Empfänger zugesendet werden soll, um die Position dieses Containers im Zeitabschnitt zu erfassen;
- direktes Ablesen (18) und faltendes Dekodieren dieses Containers, unabhängig von den anderen Containern.

## Claims

1. Digital signal, intended to be received by a plurality of receivers, and in particular receivers having limited autonomy, of the type organised into signal frames, each frame comprising a main data channel (34) organised into sub-channels, **characterised in that** at least some of the said frames furthermore comprise at least one data transport path (35) comprising at least one data channel organised into independent data blocks dedicated to a single service, referred to as containers (36, 37ᵢ to 37_{N}; 53ᵢ, 55ᵢ, 56ᵢ, 57ᵢ),
each container comprising:
- a header (41) consisting of a selection sub-header (44), containing in particular identification data (46) for a group of at least one destination receiver of the container, and a service sub-header (45), containing in particular data dedicated to the service;
- a useful data field (42) containing source data corresponding to a given service; and
- an error detection and/or correction data field (43), the said selection sub-headers (44) being disconnected from their containers and assembled in at least one specialised service container subjected to simplified channel encoding, so that the said receivers can detect the presence of a container which is dedicated to it by low-cost decoding analysis of the said specialised service container, the said selection sub-headers (44) furthermore containing access data making it possible to determine the position (410) of the corresponding container in the said data path, each container independently undergoing specific convolution encoding (74).

2. Signal according to Claim 1, **characterised in that** the said data path is subdivided into at least two channels, each of the said channels undergoing separate channel encoding.

3. Signal according to Claim 2, **characterised in that** at least one first channel undergoes time interleaving, and **in that** at least one second channel does not undergo time interleaving.

4. Signal according to any one of Claims 1 to 3, the said signal being organised into elementary data blocks of predefined size, referred to as capacity units, **characterised in that** each container consists of an integer number of capacity units.

5. Signal according to any one of Claims 1 to 4, **characterised in that** at least some of the said containers each carry a data cell in the ATM (asynchronous transfer mode) format.

6. Signal according to any one of Claims 1 to 5, **characterised in that** at least some of the said selection sub-headers are transmitted by anticipation in at least one frame preceding the frame containing the corresponding container.

7. Signal according to any one of Claims 1 to 6, **characterised in that** at least some of the said containers comprise confirmation data, placed at the start of the container, making it possible to specify and/or validate the identification of a destination receiver of the following data in the said container.

8. Signal according to any one of Claims 1 to 7, **characterised in that** the said data path (35) is placed at the end of each frame.

9. Method for broadcasting a digital signal, comprising the following steps:
- providing (71) at least one identified source signal element, intended to be received by at least one specific receiver;
- constructing (72) at least one data container corresponding to the said identified source signal element, comprising the steps of:
- subdividing (73) the said signal source element into at least one data block of predetermined size;
- specifically convolution-encoding (74) the said data block;
- associating (75) a header with the said data block, the header comprising a selection sub-header, containing in particular identification data of a group at least one destination receiver of the container, and a service sub-header, containing in particular data dedicated to the service;
- creating at least one special selection container, in which the said selection sub-headers are assembled after having been disconnected from the corresponding headers;
- constructing (76) a data path, containing a plurality of containers, at least one of which is a special selection container;
- constructing (77) a signal frame comprising in particular the said data path;
- transmitting (77) the said frame.

10. Method for receiving a signal according to any one of Claims 1 to 8, in a destination receiver of the said signal element with sporadic operation, comprising the following steps:
- exiting standby (12), this being instigated at regular time intervals, corresponding substantially to the duration of at least one of the said frames, by an internal clock;
- searching (13) for the synchronization of the frame being transmitted, and resetting the said internal clock;
- reading, at a predetermined location in the said frame, a set of selection sub-headers corresponding to the containers contained in the said frame, and searching (14) for a selection sub-header designating a container intended for the said receiver;
- analysing (14; 21, 22) the said selection sub-header designating a container intended for the said receiver, so as to determine the position in the said frame of the said container;
- directly reading (18) the said container, and convolution-decoding the said container, independently of the other containers.
